(19) Europäisches Patentamt
European Patent Office
Office européen des brevets

(11) **EP 4 468 579 A1**

(12) **EUROPEAN PATENT APPLICATION**
published in accordance with Art. 153(4) EPC

(43) Date of publication:
**27.11.2024 Bulletin 2024/48**

(21) Application number: **22922233.6**

(22) Date of filing: **28.12.2022**

(51) International Patent Classification (IPC):
**H02M 1/00** (2006.01)     **H02M 7/48** (2007.01)
**H02M 7/49** (2007.01)

(52) Cooperative Patent Classification (CPC):
**H02M 1/00; H02M 7/48; H02M 7/49**

(86) International application number:
**PCT/JP2022/048485**

(87) International publication number:
**WO 2023/140083 (27.07.2023 Gazette 2023/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.01.2022 JP 2022007106**

(71) Applicant: **Hitachi, Ltd.
Tokyo 100-8280 (JP)**

(72) Inventors:
• **SUZUKI Hiroshi
  Tokyo 100-8280 (JP)**
• **MIYOSHI Tomoyuki
  Tokyo 100-8280 (JP)**
• **FURUKAWA Tomoyasu
  Tokyo 100-8280 (JP)**

(74) Representative: **Mewburn Ellis LLP
Aurora Building
Counterslip
Bristol BS1 6BX (GB)**

(54) **POWER CONVERSION DEVICE**

(57)     In order to provide a highly reliable power conversion device, a power conversion device includes: a protection unit (60) which reduces the current flowing in the first direction (T1 to T2) when the first determination result (CP1) is affirmative, and applies the second forward voltage/current characteristic (PH) to the diode function (D) when the second determination result (CP2) is affirmative; and a bypass device (2) which, when the first determination result (CP1) or the second determination result (CP2) is affirmative, bypasses between the pair of input/output terminals (T1, T2) after the protection unit (60) operates.

FIG. 5

EP 4 468 579 A1

**Description**

Technical Field

The present invention relates to a power conversion device.

Background Art

As the background art of this technical field, the abstract of Patent Document 1 described below describes that "in a power conversion device equipped with a modular multi-level converter, many cells which combine a plurality of switching elements and DC capacitors are used, so that conduction loss due to the switching elements becomes a problem, and a bypass circuit is connected between the terminals of each of the multiple cells to control the switching element to open and close, and the bypass circuit connected to the cell being controlled by a zero voltage output is controlled to short-circuit, thereby reducing the conduction loss".

Further, the abstract of Patent Document 2 described below describes that "a semiconductor chip 5 in which an IGBT 5a and a main diode 5b are connected in antiparallel is mounted with a diode 5c for monitoring the current flowing through the main those 5b and is connected in parallel with the main diode 5b via an external resistor 9. When the voltage across the external resistor 9 is lower than a predetermined reference voltage value, freewheel mode determining means 7 determines that the current is in a freewheel mode in which the current flows back through the main diode 5b. A cutoff circuit 3 then cuts off a drive signal sent from an input circuit 2 to a drive circuit 4. Thus, since the IGBT 5a is not turned on in the freewheel mode, the forward voltage drop of the main diode 5b can be suppressed from increasing".

Further, the abstract of Patent Document 3 described below describes that "there are provided a semiconductor device having performance that combines low conduction loss and low recovery loss and capable of achieving low power consumption, and a power conversion device using the same".

Citation List

Patent Literature

    Patent Literature 1: International Publication No. WO 2017/077983
    Patent Literature 2: Japanese Unexamined Patent Application Publication No. 2008-72848
    Patent literature 3: Japanese Unexamined Patent Application Publication No. 2018-117044

Summary of Invention

Technical Problem

By the way, in the technology described above, there is a demand to further improve the reliability of the power conversion device.

The present invention has been made in view of the circumstances described above, and an object of the present invention is to provide a highly reliable power conversion device.

Solution to Problem

In order to solve the above problems, a power conversion device of the present invention includes: a semiconductor device connected between a pair of input/output terminals, and having a switching function of switching a current flowing in a first direction and a diode function having, as a forward direction, a second direction opposite to the first direction; a drive circuit which controls an on/off state of the switching function and applies either a first forward voltage/current characteristic or a second forward voltage/current characteristic in which a forward voltage is lower than the first forward voltage/current characteristic for the same forward current to the diode function; an overcurrent determination unit which outputs a first determination result as to whether or not the current flowing in the first direction is in a first overcurrent state and a second determination result as to whether or not a current flowing in the second direction is in a second overcurrent state; a protection unit which reduces the current flowing in the first direction when the first determination result is affirmative, and applies the second forward voltage/current characteristic to the diode function when the second determination result is affirmative; and a bypass device which, when the first determination result or the second determination result is affirmative, bypasses between the pair of input/output terminals after the protection unit operates. Advantageous Effects of Invention

According to the present invention, it is possible to provide a highly reliable power conversion device.

Brief Description of Drawings

Fig. 1 is a circuit diagram showing a schematic configuration of a power conversion device according to a first embodiment.

Fig. 2 is a block diagram of a computer.

Fig. 3 is a circuit diagram of a configuration example of a cell.

Fig. 4 is a circuit diagram of another configuration example of a cell.

Fig. 5 is a circuit diagram of a gate drive circuit and its periphery.

Fig. 6 is a diagram showing the relationship between voltages and the like of each part in Fig. 5.

Fig. 7 is a diagram showing an example of waveforms of a gate voltage and a current of a switching element.

Fig. 8 is a diagram showing an example of forward voltage/current characteristics of a freewheel diode.

Fig. 9 is an example of waveform diagrams of respective parts when a short circuit occurs in the switching element.

Fig.10 is an example of a waveform diagram of each part when a surge current flows through a freewheel diode.

Fig. 11 is a circuit diagram of a gate drive circuit and its periphery in a second embodiment.

Fig. 12 is a diagram showing examples of waveforms of a gate voltage, an auxiliary gate voltage, and a current of a switching element.

Fig. 13 is an example of waveform diagrams of respective parts when a short circuit occurs in the switching element.

Fig. 14 is a circuit diagram of a gate drive circuit and its peripheral essential parts in a third embodiment.

Fig. 15 is a diagram showing the relationship between each arm, the number of abnormal cells, and applied voltages.

Description of Embodiments

(Overview of Embodiment)

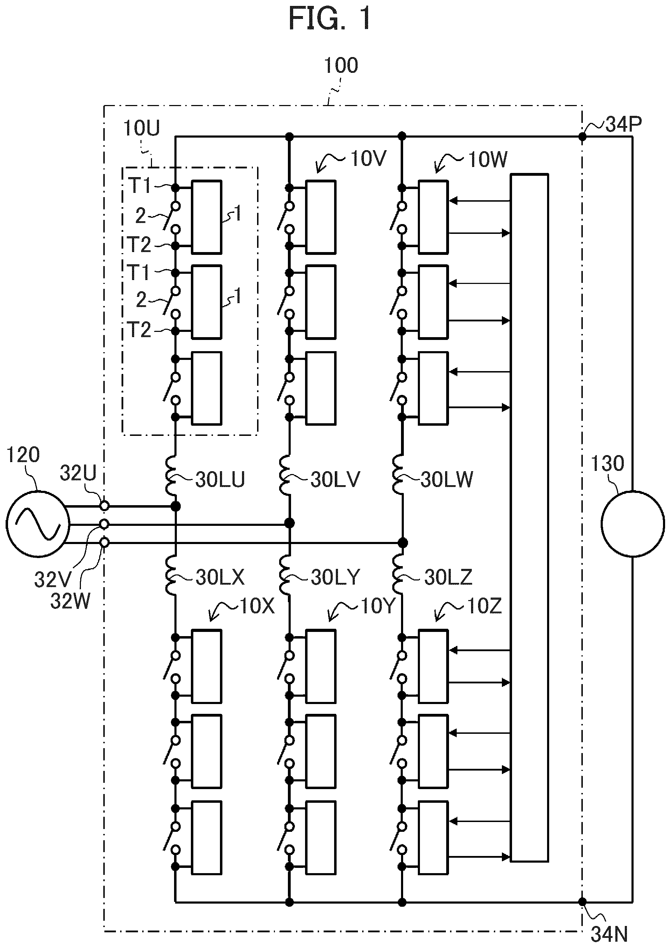

With the introduction of distributed power generation due to renewable energy such as offshore wind power and solar power, high voltage direct current (HVDC) has been applied to stably and efficiently transmit generated power. In recent years, a modular multilevel converter (MMC) is often applied to an AC/DC converter for HVDC. In MMC, as shown in Fig. 1 (its details will be described later), a large number of cells 1 are connected in series. Note that the cell 1 is also called a submodule or a unit converter. A power semiconductor module is applied to each cell 1 as a switching element.

In addition to thyristors, as power semiconductors, there have recently been increased those to which low-loss IGBTs (Insulated Gate Bipolar Transistors) have been applied. In an HVDC with a system DC voltage of several hundred kVs, it is desirable to construct MMC cells with power semiconductors having a rate breakdown voltage as high as possible and to reduce the number of cells in series for cost reduction. On the other hand, when the power semiconductor is brought into a high breakdown voltage, the scale of destruction at the time that a failure occurs also increases. Particularly, when an open-circuit failure occurs in a cell, the system DC voltage concentrates on the faulty cell, thereby causing arcing in the cell and blowing out of gas containing electrical conductivity.

Consequently, when a dielectric breakdown occurs in a cell, it may lead to events such as explosion and fires. Therefore, it is common to subject the faulty cell to short circuit (bypass) processing before the open-circuit failure occurs, and to configure the MMC system so that it can continue to operate as a whole. Thus, MMC is required to have an increase in reliability of a cell and a continuous operation of the system.

It can be considered that when, for example, the technique described in Patent Literature 1 is applied, it is possible to turn on a bypass circuit in the event of a failure in a cell to prevent excessive current from flowing through the power semiconductor. However, Patent Literature 1 does not particularly mention a method of detecting a cell failure and means for ensuring the reliability of the cell itself. Further, it is considered that the current flowing through the power semiconductor can be detected when the technique described in Patent Literature 2 is applied. That is, it is considered that the direction and magnitude of the current flowing through the power semiconductor can be detected by detecting the value of the current flowing through a current monitoring diode. However, this method needs to provide the current monitoring diode separately from a main diode.

Therefore, in each embodiment to be described later, before a semiconductor device such as a power semiconductor module leads to an open-circuit failure, such a state is detected and made explosion-proof so that the MMC cells can be made highly reliable. More specifically, before the semiconductor chip inside the power semiconductor module is broken or an open-circuit failure like fusing of wire bonding is reached, an abnormal current that triggers it is detected at an early stage. Then, in each of the embodiments to be described later, the energy consumed by the power semiconductor is instantly suppressed to increase the durability of the power semiconductor, thereby suppressing the open-circuit failure of the cell.

[First Embodiment]

<Configuration of First Embodiment>

Fig. 1 is a circuit diagram showing a schematic configuration of a power conversion device 100 according to a first embodiment.

In Fig. 1, the power conversion device 100 is connected between a three-phase AC system 120 and a DC system 130. The AC system 120 may be a distributed power source such as an offshore wind power generation system, or may be a commercial system. The DC system 130 is, for example, a DC power transmission system. The power conversion device 100 of the present embodiment may be connected to one end of the DC power transmission system, and a DC side output terminal of another device (not shown) similar to the power conversion device 100 may be connected to the other end of the DC power transmission system.

The power conversion device 100 includes U-phase, V-phase, and W-phase AC terminals 32U, 32V, and 32W, a positive-side DC terminal 34P, a negative-side DC terminal 34N, a control device 20, positive-side arms 10U, 10V, and 10W, negative-side arms 10X, 10Y, and 10Z, and reactors 30LU, 30LV, 30LW, 30LX, 30LY, and 30LZ.

Note that in the following description, a plurality of constituent elements, information, etc. having the same or similar functions and meanings may be denoted by the same reference numerals with the alphabetic characters added thereto, as in the "reactors 30LU and 30LV", for example. However, when there is no need to distinguish between these multiple constituent elements, they may be denoted without the alphabetic characters as in the "reactor 30", for example.

Each arm 10 includes cells 1 which are a plurality of unit converters connected in series. In the example of Fig. 1, the number of cells in series is set as "3" for simplicity. Then, a bypass device 2 is connected in parallel to and between input/output terminals T1 and T2 of each cell 1.

The AC terminals 32U, 32V, and 32W are electrically connected to the three-phase AC system 120. The positive-side DC terminal 34P and the negative-side DC terminal 34N are electrically connected to the DC system 130.

The low potential side of the U-phase positive-side arm 10U is electrically connected to the AC terminal 32U via the reactor 30LU. The high potential side of the U-phase positive-side arm 10U is electrically connected to the positive-side DC terminal 34P. The high potential side of the U-phase negative-side arm 10X is electrically connected to the AC terminal 32U via the reactor 30LX. The low potential side of the U-phase negative-side arm 10X is electrically connected to the negative-side DC terminal 34N.

Similarly, the low potential side of the V-phase positive-side arm 10V is electrically connected to the AC terminal 32V via the reactor 30LV. The high potential side of the V-phase positive-side arm 10V is electrically connected to the positive-side DC terminal 34P. The high potential side of the V-phase negative-side arm 10Y is electrically connected to the AC terminal 32V via the reactor 30LY. The low potential side of the V-phase negative-side arm 10Y is electrically connected to the negative-side DC terminal 34N.

Likewise, the low potential side of the W-phase positive-side arm 10W is electrically connected to the AC terminal 32W via the reactor 30LW. The high potential side of the W-phase positive-side arm 10W is electrically connected to the positive-side DC terminal 34P. The high potential side of the W-phase negative-side arm 10Z is electrically connected to the AC terminal 32W via the reactor 30LZ. The low potential side of the W-phase negative-side arm 10Z is electrically connected to the negative-side DC terminal 34N.

The control device 20 controls the operation of the power conversion device 100 based on command values supplied from the outside and various detection values detected in the power conversion device 100. Therefore, various detection values such as a voltage of a cell capacitor (details of which will be described later) included in the cell of each phase arm, a current flowing through each phase arm, a system voltage, etc. are input to the control device 20. Then, the control device 20 outputs a gate signal to the cell 1 included in the arm 10 of each phase.

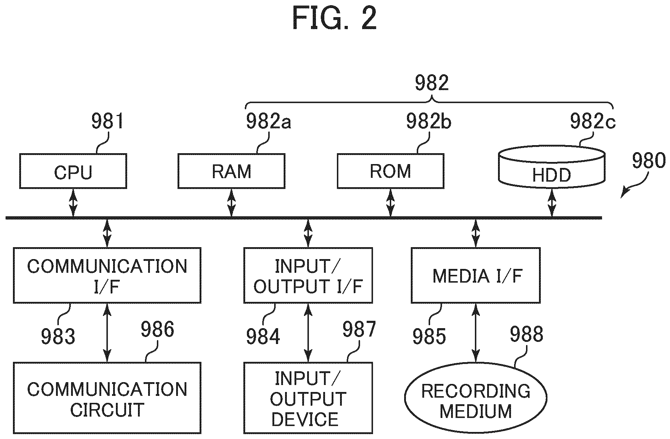

Fig. 2 is a block diagram of a computer 980. The control device 20 shown in Fig. 1 includes one or more computers 980 shown in Fig. 2.

In Fig. 2, the computer 980 includes a CPU (Central Processing Unit) 981, a storage unit 982, a communication I/F (interface) 983, an input/output I/F 984, and a media I/F 985. Here, the storage unit 982 includes a RAM (Random Access Memory) 982a, a ROM (Read Only Memory) 982b, and an HDD (Hard Disk Drive) 982c. The communication I/F 983 is connected to a communication circuit 986. The input/output I/F 984 is connected to an input/output device 987. The media I/F 985 reads and writes data from and to a recording medium 988. The ROM 982b stores control programs executed by the CPU, various data, etc. therein. The CPU 981 realizes various functions by executing application programs read in the RAM 982a.

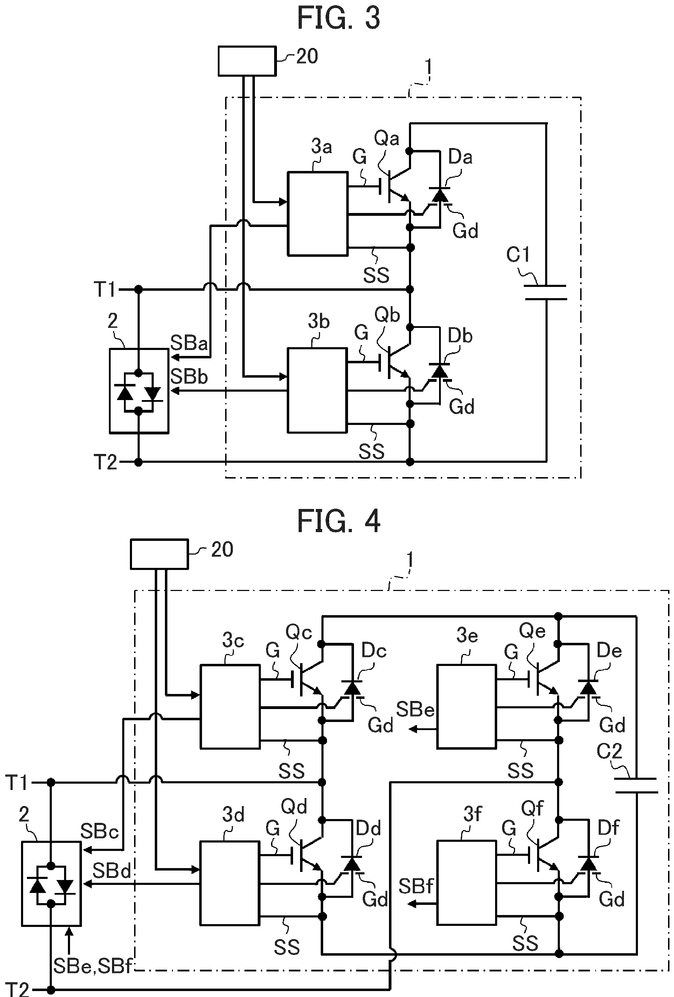

Fig. 3 is a circuit diagram of one configuration example of the cell 1.

In Fig. 3, the cell 1 includes switching elements Qa and Qb, freewheel diodes Da and Db, a cell capacitor C1, and gate drive circuits 3a and 3b. The switching elements Qa and Qb are connected in series. The emitter (low potential side) of Qa is electrically connected to the collector (high potential side) of Qb. The gate drive circuits 3a and 3b drive the switching elements Qa and Qb respectively. The collector of Qa is electrically connected to the high potential side of the cell capacitor C1. Further, the emitter of Qb is electrically connected to the low potential side of the cell capacitor C1.

The freewheel diodes Da and Db are connected in anti-parallel to the switching elements Qa and Qb respectively. The freewheel diodes Da and Db include gate control terminals Gd for controlling forward voltages, respectively. As such freewheel diodes Da and Db, for example, those described in the above-described Patent Literature 3 can be applied.

The control device 20 supplies gate drive command signals (unsigned) for controlling the switching elements Qa and Qb and the freewheel diodes Da and Db to the gate drive circuits 3a and 3b. The gate drive circuits 3a and 3b control the voltages at the gate terminals G of the switching elements Qa and Qb and the gate control terminals Gd of the freewheel diodes Da and Db according to the gate drive command signals. Accordingly, the gate drive circuits 3a and 3b control currents flowing through the switching elements Qa and Qb, forward voltages of the freewheel diodes Da and Db, etc. Incidentally, the details thereof will be described later.

A connection point between the switching elements Qa and Qb is connected to an input/output terminal T1. Also, an input/output terminal T2 is connected to the low potential side of the cell capacitor C1. Further, as described above, the bypass device 2 is connected between the input/output terminals T1 and T2. The bypass device 2 is, for example, a bypass thyristor which allows a current to flow bidirectionally, and can be configured by connecting a pair of thyristors in antiparallel. Therefore, in the following description, an example in which a bypass thyristor is applied as the bypass device 2 will be described.

The gate drive circuits 3a and 3b output drive commands SBa and SBb being binary signals, respectively. Then, if at least one of the drive commands SBa or SBb is "1", the bypass device 2 electrically short-circuits between the input/output terminals T1 and T2 to prevent a significant voltage from being applied to the cell 1. On the other hand, if the drive commands SBa and SBb are both "0", the bypass device 2 is brought into a high impedance state and no significant current will flow through the bypass device 2.

Fig. 4 is a circuit diagram of another configuration example of the cell 1. That is, while Fig. 3 described above is an example in which the cell 1 is configured by a chopper circuit, Fig. 4 is an example in which the cell 1 is configured by a bridge circuit.

In Fig. 4, the cell 1 includes switching elements Qc, Qd, Qe, and Qf, freewheel diodes Dc, Dd, De, and Df, a cell capacitor C2, and gate drive circuits 3c, 3d, 3e, and 3f.

The gate drive circuits 3c, 3d, 3e, and 3f drive the switching elements Qc, Qd, Qe, and Qf respectively. The switching elements Qc and Qd are connected in series. Likewise, the switching elements Qe and Qf are also connected in series. That is, the emitters (low potential side) of the switching elements Qc and Qe are connected to the collectors (high potential side) of the switching elements Qd and Qf respectively.

Also, the collectors of the switching elements Qc and Qe are electrically connected to the high potential side of the cell capacitor C2. Further, the emitters of the switching elements Qd and Qf are electrically connected to the low potential side of the cell capacitor C2. The freewheel diodes Dc, Dd, De, and Df are connected in antiparallel to the switching elements Qc, Qd, Qe, and Qf respectively. Also, a connection point between the switching elements Qc and Qd is electrically connected to an input/output terminal T1, and a connection point between the switching elements Qe and Qf is electrically connected to an input/output terminal T2.

The gate drive circuits 3c, 3d, 3e, and 3f apply gate drive voltages to the gate terminals G of the switching elements Qc, Qd, Qe, and Qf and the gate control terminals Gd of the freewheel diodes Dc, Dd, De, and Df based on gate drive command signals (unsigned) supplied from the control device 20, respectively. Thus, the gate drive circuits 3c to 3f control the currents flowing through the switching elements Qc to Qf and the forward voltages of the freewheel diodes Dc to Df.

Further, the gate drive circuits 3c to 3f output drive commands SBc, SBd, SBe, and SBf which are binary signals, respectively. If at least one of these drive commands SBc to SBf is "1", the bypass device 2 electrically short-circuits between the input/output terminals T1 and T2 to prevent a significant voltage from being applied to the cell 1. On the other hand, if all the drive commands SBc to SBf are "0", the bypass device 2 is brought into a high impedance state and no significant current will flow through the bypass device 2.

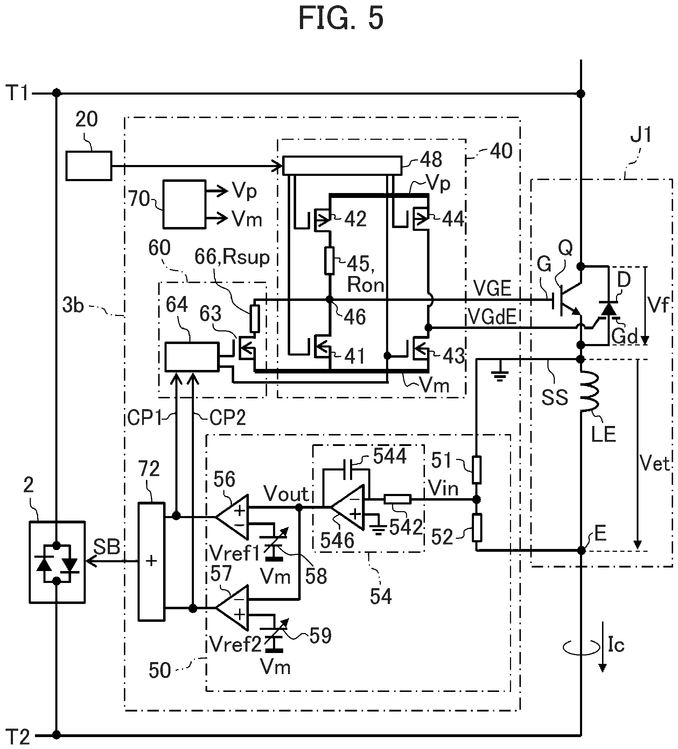

Fig. 5 is a circuit diagram of a gate drive circuit 3 and its periphery. The gate drive circuit 3 shown in the drawing is any of the gate drive circuits 3a to 3f (refer to Figs. 3 and 4). Similarly, the switching element Q (switching function, semiconductor element) is any of the switching elements Qa to Qf, the freewheel diode D (diode function) is any of the freewheel diodes Da to Df, and the drive command SB is any of the drive commands SBa to SBf. Also, in Fig. 5, a description will be made about an example in which an IGBT is applied as the switching element Q.

In Fig. 5, the gate drive circuit 3 includes a drive circuit 40, a short circuit/surge detection circuit 50 (overcurrent determination unit), a suppress circuit 60 (protection unit), a power supply unit 70, and an OR circuit 72. The power supply unit 70 applies a predetermined positive side voltage Vp and a negative side voltage Vm to each part in the gate drive circuit 3.

Also, the switching element Q and the freewheel diode D described above are included in a power semiconductor module J1 (semiconductor device) shown in the drawing. Here, a parasitic inductance LE exists between the emitter terminal of the switching element Q and the output terminal E on the low potential side of the power semiconductor module J1. The parasitic inductance LE is, for example, a wiring inductance between the IGBT chip which configures the switching element Q or the diode chip which configures the freewheel diode D and the output terminal E of the power semiconductor module mounting them. It usually has an inductance value of several nH. A back electromotive force Vet generated in the parasitic inductance LE is proportional to a differentiation result of a current Ic output from the power semiconductor module J1.

Further, the drive circuit 40 includes a gate control unit 48, NMOSFETs 41 and 43, PMOSFETs 42 and 44, and a resistor 45 (first resistor). Here, the NMOSFET 41 and PMOSFET 42 are for controlling the voltage of the gate terminal G of the switching element Q. Further, the NMOSFET 43 and the PMOSFET 44 are for controlling the voltage of the gate control terminal Gd of the freewheel diode D. Hereinafter, the NMOSFETs 41 and 43 and the PMOSFETs 42 and 44 may be simply referred to as "FETs 41 to 44".

A positive side voltage Vp is applied to the source terminals of the PMOSFETs 42 and 44, and a negative side voltage Vm is applied to the source terminals of the NMOSFETs 41 and 43. A connection point 46 between the resistor 45 and the NMOSFET 41 in the drive circuit 40 is connected to the gate terminal G of the switching element Q. The drain terminal of the PMOSFET 44 is connected to the drain terminal of the NMOSFET 43, and a connection point therebetween is connected to the gate control terminal Gd of the freewheel diode D.

The gate control unit 48 is connected between the control device 20 and the gate terminals of the respective FETs 41 to 44. The gate control unit 48 complementarily on/off-drives the PMOSFET 42 and the NMOSFET 41 based on a gate drive command signal (unsigned) from the control device 20. Thus, the gate control unit 48 controls the voltage of the gate terminal G with respect to a reference terminal SS of the switching element Q, i.e., a gate voltage VGE. Here, when the gate voltage VGE exceeds a predetermined threshold voltage Vth1 (not shown), the switching element Q is brought into an on state. On the other hand, when the gate voltage VGE becomes less than or equal to the threshold voltage Vth1, the switching element Q is brought into an off state to cut off the current Ic.

Further, the gate control unit 48 complementarily on/off-drives the PMOSFET 44 and the NMOSFET 43 based on a gate drive command signal (unsigned) from the control device 20. Thus, the gate control unit 48 controls a gate voltage VGdE of the freewheel diode D (the voltage of the gate control terminal Gd with respect to the reference terminal SS of Qb). Consequently, the gate control unit 48 controls a forward voltage VF when the freewheel diode D conducts the current.

When the gate voltage VGdE exceeds a predetermined threshold voltage Vth2 (not shown) when the freewheel diode D conducts the current, the amount of minority carriers (holes) injected from the anode is reduced, and the conductivity modulation inside the element is suppressed, so that the forward voltage VF is increased. Further, when the gate voltage VGdE becomes less than or equal to a threshold voltage Vth2 when the freewheel diode D conducts the current, the injection amount of holes increases and the conductivity modulation inside the element is promoted, thereby resulting in a decrease in the forward voltage VF.

Further, the short circuit/surge detection circuit 50 includes voltage dividing resistors 51 and 52, an integration circuit 54 (integration signal output unit), comparators 56 and 57 (determination units) for determining an abnormal current, and variable voltage sources 58 and 59.

The voltage dividing resistors 51 and 52 are connected in series, and such a series circuit is connected to the reference terminal SS of the switching element Q and the output terminal E of the power semiconductor module J1. Further, a connection point between the voltage dividing resistors 51 and 52 is connected to an input terminal of the integration circuit 54. The voltage dividing resistors 51 and 52 have resistance values R1 and R2 respectively, divide the back electromotive force Vet generated in the parasitic inductance LE of the power semiconductor module J1, and output a result of the division as an input voltage Vin to the integration circuit 54.

By the way, the back electromotive force Vet generated in the parasitic inductance LE is as expressed in the following equation (1):

$$\mathrm{Vet} = -\mathrm{LE} \times \mathrm{dIc/dt} \qquad (1)$$

Further, assuming that the ratio (R1/R2) of the resistance values R1 and R2 of the voltage dividing resistors 51 and 52 is a voltage dividing ratio $\alpha$, the input voltage Vin of the integration circuit 54 is as expressed in the following equation (2):

$$\mathrm{Vin} = \alpha \times \mathrm{Vet} \qquad (2)$$

The integration circuit 54 includes a resistor 542, a capacitor 544, and an operational amplifier 546. The resistor 542 is connected to the connection point of the voltage dividing resistors 51 and 52 and an inverting input terminal (-) of the operational amplifier 546. Further, a non-inverting input terminal (+) of the operational amplifier 546 is connected to the reference terminal SS of the switching element Q. Thus, the integration circuit 54 time-integrates the input voltage Vin and outputs a result of the time-integration as an output voltage Vout (integration signal).

Assuming that the resistance value of the resistor 542 is R, and the capacitance of the capacitor 544 is C, the output voltage Vout is as expressed in the following equation (3). Since the input voltage Vin is proportional to a differentiation result of the current Ic of the power semiconductor module J1, the output voltage Vout becomes a voltage proportional to the current Ic flowing through the switching element Q or the freewheel diode D.

$$Vout = - (1/RC) \times \int Vin \, dt \qquad (3)$$

A negative side voltage Vm is applied to the negative electrodes of the variable voltage sources 58 and 59. The sum of an output voltage of the variable voltage source 58 and the negative side voltage Vm becomes a short-circuit determination voltage Vref1 which is a positive value. The sum of an output voltage of the variable voltage source 59 and the negative side voltage Vm becomes a surge determination voltage Vref2 which is a negative value. The short-circuit determination voltage Vref1 is applied to an inverting input terminal (-) of the comparator 56, and the surge determination voltage Vref2 is applied to a non-inverting input terminal (+) of the comparator 57. Further, the output terminal of the integration circuit 54 is connected to a non-inverting input terminal (+) of the comparator 56 and an inverting input terminal (-) of the comparator 57.

Thus, the comparator 56 compares the short-circuit determination voltage Vref1 and the output voltage Vout and outputs a comparison signal CP1 (first determination result) which becomes "1" when "Vout≥Vref1" and becomes "0" otherwise. Further, the comparator 57 compares the surge determination voltage Vref2 and the output voltage Vout and outputs a comparison signal CP2 (second determination result) which becomes "1" when "Vref2≥Vout" and becomes "0" otherwise.

The comparison signals CP1 and CP2 are supplied to the suppress circuit 60 and the OR circuit 72. The OR circuit 72 supplies the logical sum of the comparison signals CP1 and CP2 to the bypass device 2 as a drive command SB. Thus, the short circuit/surge detection circuit 50 detects the magnitude and direction of the current Ic flowing through the switching element Q or the freewheel diode D based on the back electromotive force Vet generated in the parasitic inductance LE and determines whether an abnormal current is flowing through them.

Thus, in the present embodiment, the magnitude and direction of the current Ic are determined using the parasitic inductance LE. The parasitic inductance LE is parasitically provided as a wiring inductance of the power semiconductor module J1. Therefore, according to the present embodiment, there is no need to provide the IGBT or diode for current monitoring, and there is an advantage that the cost can be reduced.

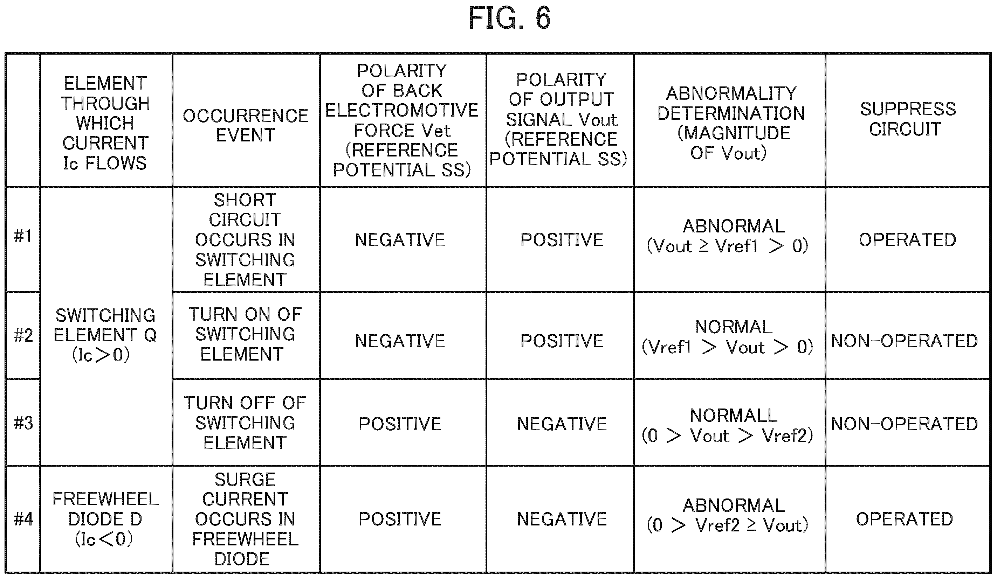

Fig. 6 is a diagram showing the relationship between the voltages and the like at the respective parts in Fig. 5.

In Fig. 6, the relationship between the voltages and the like of each part is shown in cases divided into #1 to #4. The case #1 is a case in which the switching element Q is short-circuited. In this case, a current Ic which exceeds the normal turn-on operation (case #2) flows through the switching element Q. Here, the rate of increase in the current Ic (di/dt) is defined as positive when the current increases in the direction of Ic shown in Fig. 5. Since this current Ic increases with the lapse of time, the polarity of the back electromotive force Vet becomes negative, and the polarity of the output voltage Vout becomes positive. Then, since the output voltage Vout becomes equal to or higher than the short-circuit determination voltage Vref1, it is determined by the comparator 56 that an abnormality has occurred, and the comparison signal CP1 becomes "1". Consequently, the suppress circuit 60 operates.

Also, the case #2 is a case in which the switching element Q is turned on. In this case, the current Ic flowing through the switching element Q increases with the lapse of time. Therefore, the polarity of the back electromotive force Vet becomes negative, and the polarity of the output voltage Vout becomes positive. However, since the output voltage Vout becomes less than the short-circuit determination voltage Vref1 in a normal turn-on operation, it is determined by the comparator 56 that normal determination has been made, and the comparison signals CP1 and CP2 both become "0". Therefore, the suppress circuit 60 does not operate.

Further, the case #3 is a case in which the switching element Q is turned off. In this case, the current Ic flowing through the switching element Q decreases with the lapse of time. Therefore, the polarity of the back electromotive force Vet becomes positive, and the polarity of the output voltage Vout becomes negative. Then, since the output voltage Vout exceeds the surge determination voltage Vref2 (because the absolute value of the output voltage Vout is smaller than the absolute value of the surge determination voltage Vref2), it is determined that normal determination has been made, and the comparison signals CP1 and CP2 both become "0". Therefore, the suppress circuit 60 does not operate.

In addition, the case #4 is a case in which a surge current flows into the freewheel diode D. This surge current is generated, for example, in the cases where the high potential side and the low potential side of the cell capacitor C1 are electrically short-circuited, etc. in Fig. 3. That is, the assumed surge current is an excessive forward current which flows through the freewheel diode D and exceeds the rated current. In this case, since the current Ic decreases with the lapse of time (its absolute value becomes large), the polarity of the back electromotive force Vet becomes positive, and the polarity of the output voltage Vout becomes negative. Since the output voltage Vout fluctuates beyond the normal turn-off range when the surge current flows, the output voltage Vout becomes less than or equal to the surge determination voltage Vref2 (the absolute value of the output voltage Vout becomes greater than or equal to the absolute value of the surge determination voltage Vref2). Consequently, it is determined by the comparator 57 that an abnormality has occurred, and the comparison signal CP2 becomes "1", so that the suppress circuit 60 operates.

Returning to Fig. 5, the suppress circuit 60 includes an NMOSFET 63, a gate control unit 64, and a resistor 66 (second resistor).

The negative side voltage Vm is applied to a source terminal of the NMOSFET 63. A drain terminal of the NMOSFET 63 is connected to the gate terminal G of the switching element Q via the resistor 66. The comparison signals CP1 and CP2 output by the comparators 56 and 57 are input to the gate control unit 64. Further, the output terminals of the gate control unit 64 are connected to the gate terminals of the NMOSFET 43 and the NMOSFET 63, respectively.

When the comparison signal CP1 becomes "1", the gate control unit 64 holds the NMOSFET 63 in an on state only for a predetermined holding time T11. At this time, since the switching element Q is in a conducting state, the PMOSFET 42 which controls the gate terminal G is also in an on state. Therefore, both the PMOSFET 42 and the NMOSFET 63 are brought into an on state during the holding time T11. The gate voltage VGE was the positive side voltage Vp while the comparison signal CP1 was "0", but when the comparison signal CP1 rises to "1", the gate voltage VGE drops to a suppress voltage Vsup shown in the following equation (4).

$$\mathrm{Vsup} = (\mathrm{Rsup}/(\mathrm{Ron} + \mathrm{Rsup})) \times (\mathrm{Vp}-\mathrm{Vm})+\mathrm{Vm} \qquad (4)$$

However, in the equation (4), the resistance value Rsup is the resistance value of the resistor 66, and the resistance value Ron is the resistance value of the resistor 45. Incidentally, the suppress voltage Vsup is preferably made to be a value higher than the threshold voltage Vth1 (not shown) of the switching element Q and lower than the positive side voltage Vp (that is, "Vth1<Vsup<Vp").

Further, when the comparison signal CP2 becomes "1", the gate control unit 64 holds the NMOSFET 43 in an on state only for the predetermined holding time T11. As a result, the gate voltage VGdE of the freewheel diode D is held at the negative side voltage Vm lower than the threshold voltage Vth2 by a predetermined holding time T12. Consequently, in the freewheel diode D, the injection of holes from the anode increases, and the conductivity modulation inside the element is promoted, thus resulting in a decrease in the forward voltage VF.

Lowering the forward voltage VF enables the power consumption generated in the freewheel diode D through which the surge current flows, to be greatly reduced. Thus, since the resistance of the freewheel diode D is improved, the possibility of an open-circuit failure of the power semiconductor module J1 can be detected and explosion-proofed before its open-circuit failure occurs, and the reliability of the cell 1 can be improved.

Further, the OR circuit 72 supplies the logical sum of the comparison signals CP1 and CP2 to the bypass device 2 as the drive command SB. As described above, the drive command SB shown in Fig. 5 is any of the drive commands SBa to SBf (refer to Figs. 3 and 4). The bypass device 2 is brought into a non-conducting state if all the supplied drive commands SB are "0". On the other hand, when any of the drive commands SB becomes "1", the bypass device 2 electrically short-circuits the input/output terminals T1 and T2 so that no significant voltage is applied to the power semiconductor module J1. Thus, even if an abnormality occurs in any of the cells 1 constituting the power conversion device 100 shown in Fig. 1, the power conversion device 100 which is the MMC system can continue to operate by bypassing the input and output by the bypass device 2 provided in the cell 1.

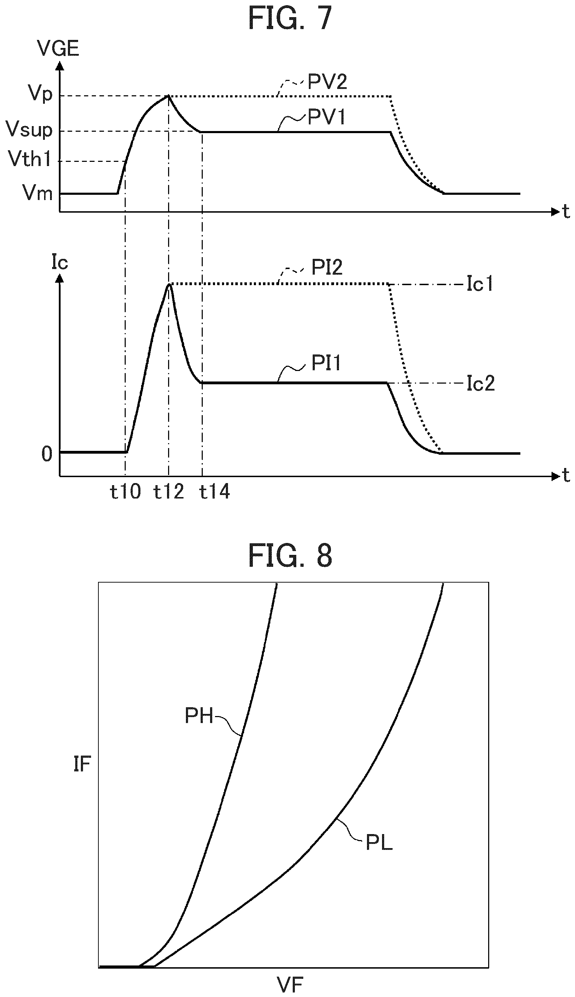

Fig. 7 is a diagram showing an example of waveforms of the gate voltage VGE and current Ic of the switching element Q.

The horizontal axis of Fig. 7 indicates a time t, and the vertical axis indicates the voltage and current. In a solid-line voltage waveform PV1 shown in Fig. 7, the gate voltage VGE is less than or equal to the threshold voltage Vth1 before a time t10. Therefore, in a current waveform PI1 indicated by the solid line, the current Ic is "0" before the time t10. When the gate voltage VGE exceeds the threshold voltage Vth1 at the time t10, the current Ic increases subsequently as the gate voltage VGE rises. Then, when the gate voltage VGE reaches the positive side voltage Vp at a time t12, the current Ic reaches a saturation current Ic1. Thereafter, when the gate voltage VGE is lowered, the current Ic is lowered accordingly. Then, when the gate voltage VGE reaches the suppress voltage Vsup at a time t14, the current Ic becomes a saturation current Ic2.

A voltage waveform PV2 indicated by a broken line illustrated in Fig. 7 is a voltage waveform when the gate voltage VGE is maintained at the positive side voltage Vp even after the time t12, and a current waveform PI2 is a current waveform in that case. The saturation current of the switching element Q is proportional to $(VGE-Vth1)^2$, and the current Ic in the figure is the saturation current of the switching element Q. Therefore, the saturation current of the switching element Q can be reduced by "Ic1-Ic2" by lowering the gate voltage VGE from the positive side voltage Vp to the suppress voltage Vsup. Thus, the power consumption of the switching element Q can be greatly reduced, and the resistance of the switching element Q can be improved. Therefore, it is possible to detect the possibility of an open-circuit failure of the power semiconductor module J1 before it occurs and proof it against explosion, thereby enhancing the reliability of the cell 1.

Fig. 8 is a diagram showing an example of forward voltage/current characteristics of the freewheel diode D.

The horizontal axis of Fig. 8 indicates the forward voltage VF, and the vertical axis indicates the forward current IF. A low injection characteristic PL (first forward voltage/current characteristic) in the figure is a characteristic when the gate voltage VGdE of the freewheel diode D is set to the positive side voltage Vp, that is, in a low injection mode. Further, a high injection characteristic PH (second forward voltage/current characteristic) is a characteristic when the gate voltage VGdE is set to the negative side voltage Vm, that is, in a high injection mode. As is clear from the same figure, when the high injection characteristic PH is used, the forward voltage VF for the same forward current IF can be lowered compared to the low injection characteristic PL. The power consumption in the freewheel diode D is proportional to the square of the forward voltage VF. Therefore, for example, when a surge current is generated in the freewheel diode D, the high injection characteristic PH can significantly reduce the power consumption generated in the freewheel diode D compared to the low injection characteristic PL.

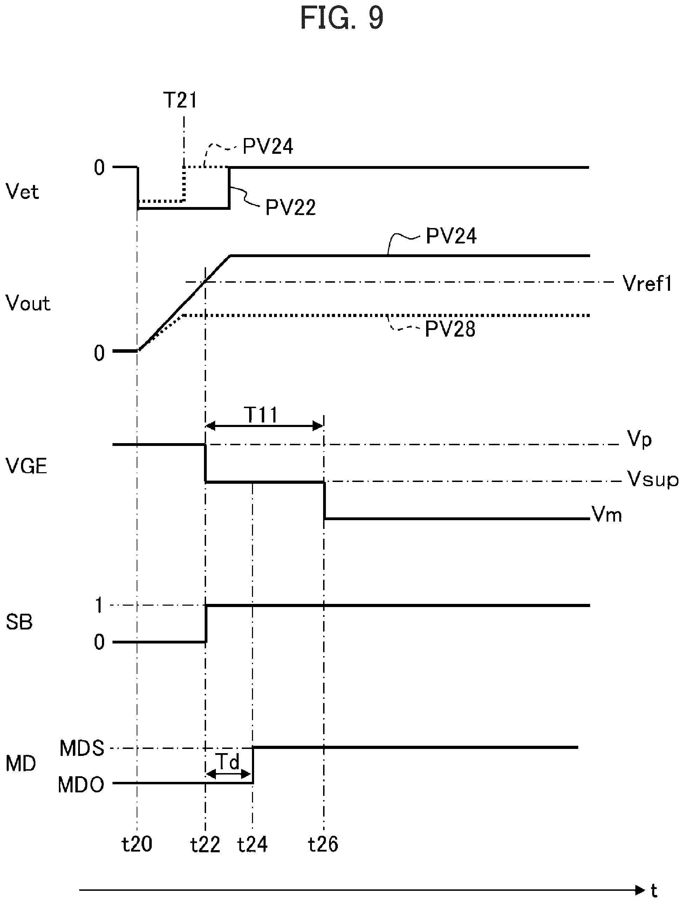

Fig. 9 is an example of waveform diagrams of respective parts when a short circuit occurs in the switching element Q.

Voltage waveforms PV22 and PV26 indicated by solid lines in Fig. 9 are the waveforms of a back electromotive force Vet and an output voltage Vout when the short circuit occurs in the switching element Q. Further, voltage waveforms PV24 and PV28 indicated by broken lines are the waveforms of the back electromotive force Vet and the output voltage Vout during the normal operation when no short circuit occurs in the switching element Q.

Assume that a short circuit occurs in the switching element Q (refer to Fig. 5) at a time t20 in Fig. 9. Then, as indicated by the voltage waveform PV22, the back electromotive force Vet in the parasitic inductance LE falls in the negative direction. (The absolute value of the back electromotive force Vet increases). Thus, the output voltage Vout of the integration circuit 54 of Fig. 5 rises with the lapse of time as indicated by the voltage waveform PV26. This output voltage Vout becomes a value proportional to the current Ic. When the output voltage Vout exceeds the short-circuit determination voltage Vref1 at a time t22, the comparison signal CP1 (refer to Fig. 5) becomes "1". Then, the suppress circuit 60 changes the gate voltage VGE of the switching element Q from the positive side voltage Vp to the suppress voltage Vsup. As a result, it is possible to instantaneously suppress the energy consumed by the switching element Q and to bring the switching element Q into high resistance.

Further, when the comparison signal CP1 becomes "1", the drive command SB supplied to the bypass device 2 also becomes "1" at a time t22. In Fig. 9, the operation mode MD of the bypass device 2 is either an open mode MDO which brings the bypass device 2 into a high impedance state, or a short-circuit mode MDS which brings the bypass device 2 into a short-circuited state. Further, normally (in the illustrated example, after the time t20), the operation mode MD is the open mode MDO. However, at a time t24 when an operation delay time Td has elapsed from the time t22, the operation mode MD of the bypass device 2 becomes the short-circuit mode MDS.

The timing at which the suppress circuit 60 starts operating (the time t22 in the illustrated example) is preferably earlier than the timing (a time t24 in the illustrated example) at which the bypass device 2 enters the short-circuit mode MDS. Since the operation delay time Td for turning on the bypass device 2 exists in the configuration shown in Fig. 5, this requirement is normally met. Thus, the energy consumed by the switching element Q can be suppressed at an early timing, and the possibility of making the power semiconductor module J1 explosion-proof before the power semiconductor module J1 comes to an open-circuit failure can be improved.

After the short-circuit mode of the cell 1 is ensured by the bypass device 2, the switching element Q may be cut off by lowering the gate voltage VGE to the negative side voltage Vm at an arbitrary timing (a time t26 in the illustrated example). That is, in the gate control unit 64 of Fig. 5, it is preferable to set the holding time T11 for suppressing the switching element Q so that "Td<T11". In other words, as shown in the figure, the relationship between the respective times is preferably "t22<t24<t26".

Further, as shown in the voltage waveform PV28 in the figure, even during the normal operation, when the switching element Q is turned on, a negative back electromotive force Vet is generated in the parasitic inductance LE when viewed from the reference terminal SS. However, as shown in the voltage waveform PV28, during the normal operation, the output voltage Vout which is the result of integration of the back electromotive force Vet becomes less than the short-circuit determination voltage Vref1. That is, each constant in the integration circuit 54 (refer to Fig. 5) is set so that the characteristics of the voltage waveform PV28 of Fig. 9 are obtained. Therefore, the suppress circuit 60 and the bypass device 2 do not operate during the normal operation, and the cell 1 continues to operate normally.

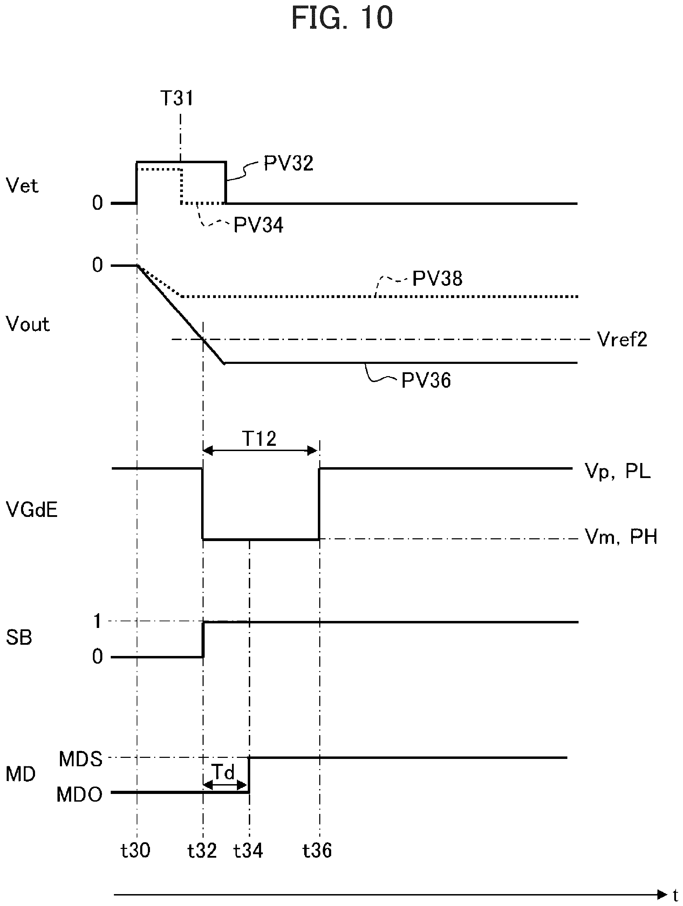

Fig. 10 is an example of a waveform diagram of each part when a surge current (excessive current) flows through the freewheel diode D.

Voltage waveforms PV32 and PV36 indicated by solid lines in Fig. 10 are the waveforms of a back electromotive force Vet and an output voltage Vout when a surge current is generated. Further, voltage waveforms PV34 and PV38 indicated by broken lines are the waveforms of a back electromotive force Vet and an output voltage Vout during the normal operation in which no surge current is generated.

Assume that a surge current flows through the freewheel diode D at a time t30 in Fig. 10. Then, as shown in the voltage waveform PV32, the back electromotive force Vet in the parasitic inductance LE rises in the positive direction. Thus, as shown in the volage waveform PV36, the output voltage Vout decreases with the lapse of time. As described above, the output voltage Vout becomes a value proportional to the current Ic.

When the output voltage Vout becomes less than the surge determination voltage Vref2 at a time t32 (when the absolute value of Vout exceeds the absolute value of Vref2), the comparison signal CP2 (refer to Fig. 5) becomes "1". Then, the suppress circuit 60 holds the gate voltage VGdE of the freewheel diode D at the negative side voltage Vm being less than the threshold voltage Vth2 (not shown) only for the holding time T12. Consequently, the forward voltage/current characteristic of the freewheel diode D changes from the low injection characteristic PL (refer to Fig. 8) to the high injection characteristic PH only for the holding time T12. That is, the energy consumed by the freewheel diode D is instantaneously suppressed, and the freewheel diode D is instantaneously brought into high resistance.

As described above, the operation mode MD of the bypass device 2 is normally the open mode MDO (after a time t30 in the illustrated example). However, at a time t34 when the operation delay time Td has elapsed from a time t32, the operation mode MD of the bypass device 2 becomes the short-circuit mode MDS. The timing (the time t32 in the illustrated example) at which the suppress circuit 60 changes the gate voltage VGdE of the freewheel diode D to the negative side voltage Vm is preferably earlier than the timing (the time t34 in the illustrated example) at which the bypass device 2 enters the short-circuit mode MDS. Since the operation delay time Td for turning on the bypass device 2 exists in the configuration shown in Fig. 5, this requirement is normally met.

After the short-circuit mode of the cell 1 is ensured by the bypass device 2, the gate voltage VGdE of the freewheel diode D is preferably returned to the positive side voltage Vp at an arbitrary timing (a time t36 in the illustrated example) to restore the characteristic of the freewheel diode D to the low injection characteristic PL. That is, in the gate control unit 64 of Fig. 5, it is preferable to set the holding time T12 for holding the gate voltage VGdE at the negative side voltage Vm so that "Td<T12". In other words, as shown in the figure, the relationship between the respective times is preferably "t32<t34<t36".

Further, as shown in the voltage waveforms PV34 and PV38 indicated by the broken lines in Fig. 10, even during the normal operation, when the current flows back through the freewheel diode D, a positive back electromotive force Vet is generated in the parasitic inductance LE when viewed from the reference terminal SS. However, during the normal operation, the output voltage Vout which is the result of integration of the back electromotive force Vet remains beyond the surge determination voltage Vref2. That is, each constant in the integration circuit 54 is set so that the voltage waveform PV38 shown in the figure is realized. Therefore, the suppress circuit 60 and the bypass device 2 do not operate during the normal operation, and the cell 1 continues to operate normally.

In the examples shown in Figs. 3 to 5, description has been made about an example in which the bypass thyristor which allows the current to flow bidirectionally is applied as the bypass device 2. However, as the bypass device 2, a circuit other than the bypass thyristor may be applied. That is, any circuit can be applied as long as it is a circuit capable of bypassing between the input/output terminals T1 and T2 according to the drive command SB supplied from the gate drive circuit 3.

For example, a mechanical switch such as a relay switch may be applied to the bypass device 2 if sufficient current can be made to flow. Generally, since the mechanical switch is longer in operation delay time Td (refer to Figs. 9 and 10) than a semiconductor switch such as a bypass thyristor, it may be difficult to short-circuit (bypass) a failed cell 1 before an open-circuit failure occurs. On the contrary, according to the present embodiment, prior to the operation of the bypass device 2, the suppress circuit 60 can bring the switching element Q or the freewheel diode D into high resistance. Therefore, even if the bypass device 2 long in operation delay time Td is applied, the power semiconductor module J1 can be explosion-proofed and the short-circuit mode can be ensured before the cell 1 results in open-circuit failure. Therefore, even if an inexpensive mechanical switch is used, it is possible to configure a highly reliable power conversion device 100 and attain its low cost.

[Second Embodiment]

Next, a second embodiment will be described. Note that in the following description, parts corresponding to those in the above-described first embodiment are denoted by the same reference numerals, and their description may be omitted. The overall configuration of a power conversion device 100 and the configuration of a cell 1 according to the second embodiment are the same as those of the first embodiment (Figs. 1 to 4). However, as described below, the configuration of a gate drive circuit 3 is different from that of the first embodiment.

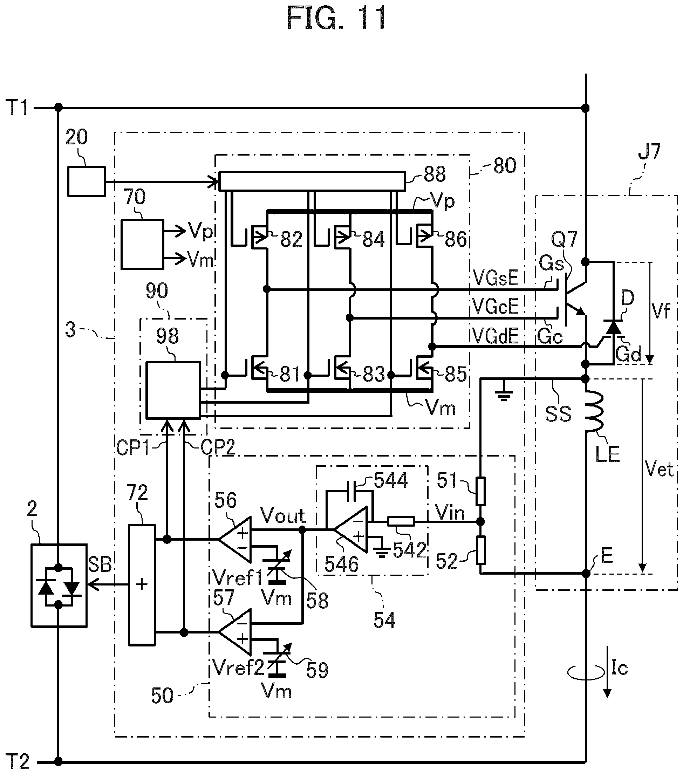

Fig. 11 is a circuit diagram of the gate drive circuit 3 and its periphery in the second embodiment.

In the present embodiment, a power semiconductor module J7 (semiconductor device) is applied instead of the power semiconductor module J1 (refer to Fig. 5). In the power semiconductor module J7, a switching element Q7 (switching function, semiconductor element) and a freewheel diode D are connected in antiparallel. The switching element Q7 includes two gate terminals which can be controlled independently of each other. They are called a gate terminal Gs (first gate terminal) and an auxiliary gate terminal Gc (second gate terminal).

Therefore, the power semiconductor module J7 includes a gate control terminal Gd of the freewheel diode D, a gate terminal Gs of the switching element Q7, and an auxiliary gate terminal Gc of the switching element Q7. Further, the gate drive circuit 3 includes a drive circuit 80 instead of the drive circuit 40 of the first embodiment in order to control voltages applied to these three terminals. The drive circuit 80 includes a gate control unit 88, NMOSFETs 81, 83, and 85, and PMOSFETs 82, 84, and 86.

Here, the NMOSFET 81 and the PMOSFET 82 are for controlling the voltage of the gate terminal Gs of the switching element Q7 with respect to the reference terminal SS, that is, for controlling the gate voltage VGsE. Also, the NMOSFET 83 and the PMOSFET 84 are for controlling the voltage of the auxiliary gate terminal Gc of the switching element Q7 with respect to the reference terminal SS, that is, for controlling the auxiliary gate voltage VGcE. Further, the NMOSFET 85 and the PMOSFET 86 are for controlling the voltage of the gate control terminal Gd of the freewheel diode D with respect to the reference terminal SS, that is, for controlling the gate voltage VGdE. Hereinafter, the NMOSFETs 81, 83, and 85 and the PMOSFETs 82, 84, and 86 may be simply referred to as "FETs 81 to 86".

A negative side voltage Vm is applied to source terminals of the NMOSFETs 81, 83, and 85, and a positive side voltage Vp is applied to source terminals of the PMOSFETs 82, 84, and 86. Further, drain terminals of the NMOSFETs 81, 83, and 85 and drain terminals of the PMOSFETs 82, 84, and 86 are connected to each other. Each connection point therebetween is connected to the gate terminal Gs of the switching element Q7, the auxiliary gate terminal Gc of the switching element Q7, and the gate control terminal Gd of the freewheel diode D, respectively. Gate terminals of the FETs 81 to 86 are connected to the gate control unit 88.

Further, in the present embodiment, a suppress circuit 90 is provided instead of the suppress circuit 60 (refer to Fig. 5) of the first embodiment. The suppress circuit 90 includes a gate control unit 98. The gate control unit 98 controls the gate voltages of the NMOSFETs 81, 83, and 85 in preference to the gate control unit 88 in the drive circuit 80.

The configuration of the gate drive circuit 3 other than that described above is the same as that of the first embodiment. Then, as with the gate control unit 48 (refer to Fig. 5) of the first embodiment, the gate control unit 88 of the present embodiment complementarily on-off drives the PMOSFET 82 and the NMOSFET 81 based on the gate drive command signal from the control device 20. Thus, the gate control unit 88 controls the gate voltage VGsE of the gate terminal Gs of the switching element Q7 with respect to the reference terminal SS, and controls a current conduction state of the switching element Q7 to be on or off. A method of controlling the gate control terminal Gd of the freewheel diode D is the same as that of the first embodiment.

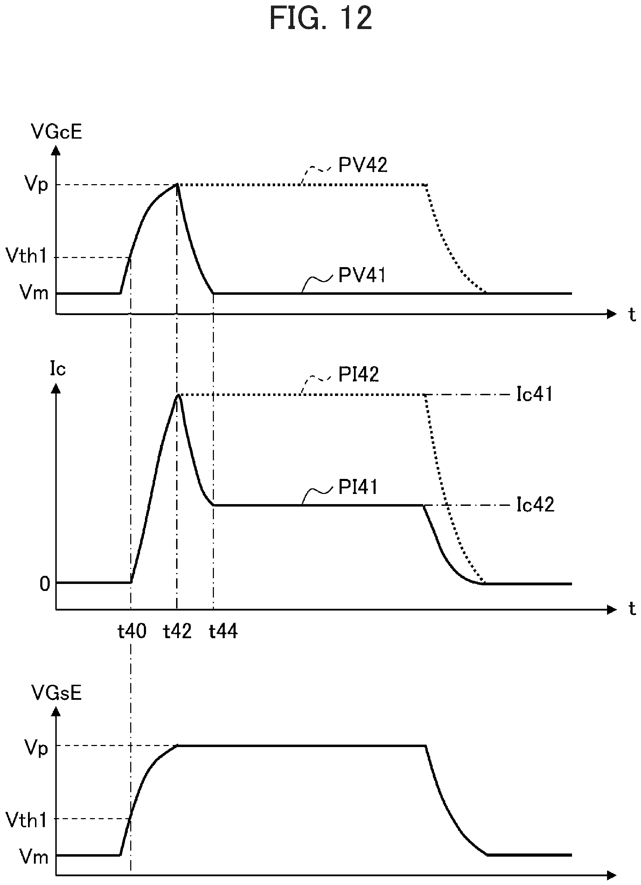

Fig. 12 is a diagram showing examples of the waveforms of the gate voltage VGsE, the auxiliary gate voltage VGcE and the current Ic of the switching element Q7.

The horizontal axis of Fig. 12 indicates the time t, and the vertical axis indicates the voltage and current. The gate voltage VGsE in Fig. 12 is less than or equal to a threshold voltage Vth1 before a time t40. Similarly, in a solid-line voltage waveform PV41, the auxiliary gate voltage VGcE is less than or equal to the threshold voltage Vth1 before the time t40. Thus, in a current waveform PI41 indicated by a solid line, the current Ic is "0" before the time t40.

When the gate voltage VGsE and the auxiliary gate voltage VGcE exceed the threshold voltage Vth1 at the time t40, the current Ic increases as the gate voltage VGsE and the auxiliary gate voltage VGcE rise subsequently. Then, when the gate voltage VGsE and the auxiliary gate voltage VGcE reach the positive side voltage Vp at a time t42, the current Ic reaches a saturation current Ic41. Thereafter, as the auxiliary gate voltage VGcE is lowered while maintaining the auxiliary gate voltage VGcE at the positive side voltage Vp, the current Ic is lowered. Then, when the auxiliary gate voltage VGcE reaches the negative side voltage Vm at a time t44, the current Ic becomes a saturation current Ic42.

A broken-line voltage waveform PV42 shown in Fig. 12 is a voltage waveform when the auxiliary gate voltage VGcE is maintained at the positive side voltage Vp even after the time t42, and a current waveform PI42 is a current waveform in that case. Therefore, the saturation current of the switching element Q7 can be reduced by "Ic41-Ic42" by lowering the auxiliary gate voltage VGcE from the positive side voltage Vp to the negative side voltage Vm. Consequently, the power consumption of the switching element Q7 can be greatly reduced, and the resistance of the switching element Q7 can be improved. Therefore, it is possible to detect the possibility of an open-circuit failure of the power semiconductor module J7 before the open-circuit failure occurs and to proof against explosion, thereby enhancing the reliability of the cell 1.

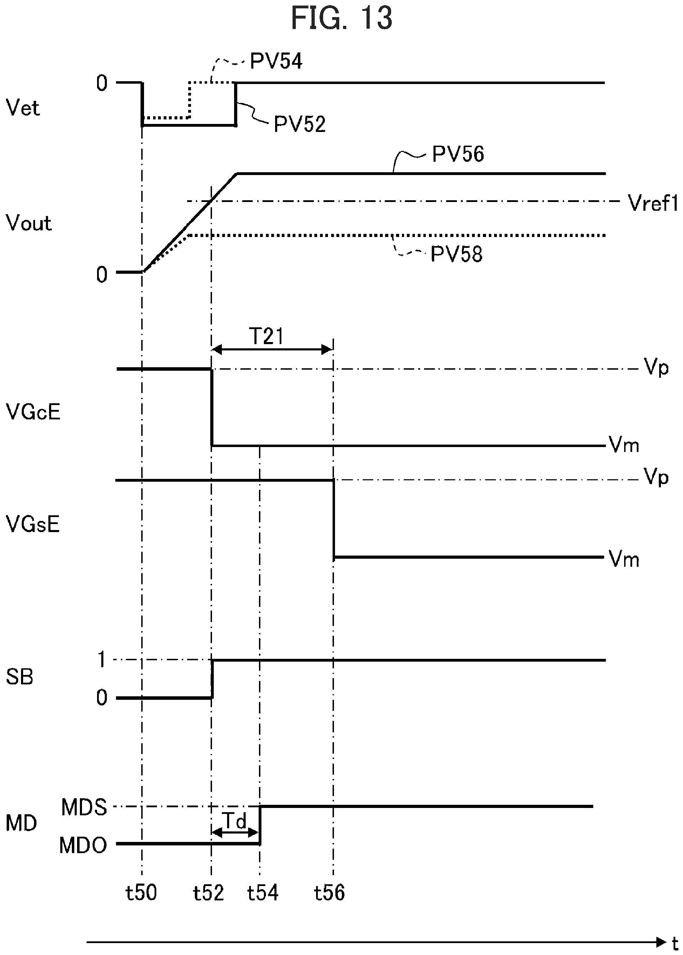

Fig. 13 is an example of a waveform diagram of each part when a short circuit occurs in the switching element Q7.

Voltage waveforms PV52 and PV56 indicated by solid lines in Fig. 13 are waveforms of a back electromotive force Vet and an output voltage Vout when a short circuit occurs in a switching element Q. Further, voltage waveforms PV54 and PV58 indicated by broken lines are waveforms of a back electromotive force Vet and an output voltage Vout during the normal operation when no short circuit occurs in the switching element Q.

Assume that a short circuit occurs in the switching element Q7 (refer to Fig. 11) at a time t50 in Fig. 13. Then, as shown in the voltage waveform PV52, the back electromotive force Vet in the parasitic inductance LE falls in a negative direction. Consequently, the output voltage Vout of the integration circuit 54 in Fig. 11 rises with the lapse of time as indicated by the voltage waveform PV56. The output voltage Vout becomes a value proportional to the current Ic. When the output voltage Vout exceeds a short-circuit determination voltage Vref1 at a time t52, the comparison signal CP1 (refer to Fig. 11) becomes "1". Then, at the time t52, the auxiliary gate voltage VGcE being the voltage of the auxiliary gate terminal Gc of the switching element Q7 is lowered from Vp to Vm by the suppress circuit 90.

At this time, the electronic current supplied to the switching element Q7 from the auxiliary gate terminal Gc of the two gate terminals of the switching element Q7 becomes zero, and only the gate terminal Gs enters into a state of supplying the electronic current to the switching element Q7. Then, as shown in Fig. 12, the saturation current can be lowered from Ic41 to Ic42. Consequently, the energy consumed by the switching element Q7 is instantaneously suppressed, and the switching element Q7 is brought into high resistance. Further, when the comparison signal CP1 becomes "1", the drive command SB supplied to the bypass device 2 also becomes "1" at the time t52.

In Fig. 13, the operation mode MD of the bypass device 2 is the open mode MDO after the time t50. However, at a time t54 when the operation delay time Td has elapsed from the time t52, the operation mode MD of the bypass device 2 becomes the short-circuit mode MDS. After the short-circuit mode of the cell 1 is ensured by the bypass device 2, the switching element Q may be cut off by lowering the gate voltage VGsE to the negative side voltage Vm at an arbitrary timing (a time t56 in the illustrated example). That is, in the gate control unit 98 of Fig. 11, it is preferable to set the holding time T21 for suppressing the switching element Q7 so as to satisfy "Td<T21". In other words, as shown in the figure, the relationship between the respective times is preferably "t52<t54<t56". Incidentally, in the present embodiment, the operation for preventing the open-circuit failure of the cell 1 due to the surge current of the freewheel diode D is the same as that of the first embodiment (refer to Fig. 10).

In the first embodiment described above, the saturation current of the switching element Q is suppressed by setting the gate voltage VGE (refer to Fig. 9) to the suppress voltage Vsup. However, since the saturation current of the switching element Q is proportional to $(VGE-Vth1)^2$, the saturation current Ic2 (refer to Fig. 7) is affected by variations in the threshold voltage Vth1 of the switching element Q7. On the contrary, according to the present embodiment, the saturation current Ic42 (refer to Fig. 12) can be defined regardless of the variations in the threshold voltage Vth1, so that more robust control can be realized.

[Third Embodiment]

Next, a third embodiment will be described. Incidentally, in the following description, parts corresponding to those of other embodiments described above are denoted by the same reference numerals, and their description may be omitted. The overall configuration of a power conversion device 100 according to the third embodiment and the configuration of a cell 1 are the same as those of the first embodiment (Figs. 1 to 4). However, as will be described below, the peripheral configuration of a gate drive circuit 3 is different from that of the first embodiment.

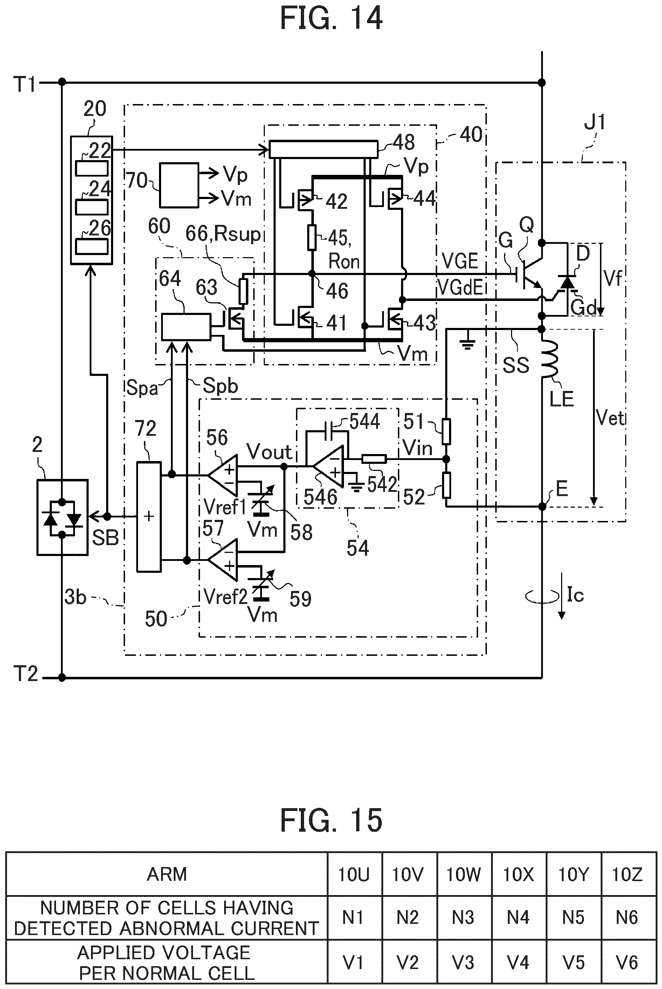

Fig. 14 is a circuit diagram of the gate drive circuit 3 and its peripheral essential parts in the third embodiment.

The third embodiment is different from the first embodiment in that the gate drive circuit 3 supplies the drive command SB to the control device 20. Further, the control device 20 includes the computer 980 (refer to Fig. 2) as described above. In Fig. 14, the inside of the control device 20 shows functions realized by the application programs of the computer 980.

That is, the control device 20 in the present embodiment includes a drive command summing part 22, a cell voltage calculation unit 24, and a system voltage setting unit 26. The drive command summing part 22 adds, for each arm 10, the number of commands being "1" among the drive commands SB received from each cell 1 (refer to Fig. 1), i.e., the number of cells in which an abnormal current is detected. Addition results for each arm 10 are assumed to be the number of abnormal cells N1, N2, N3, N4, N5, and N6 (refer to Fig. 15), respectively.

Here, the number of cells in series in each arm 10 is assumed to be Ncell, and the system DC voltage in the DC system 130 is assumed to be Vsys. The cell voltage calculation unit 24 calculates applied voltages V1, V2, V3, V4, V5, and V6 (refer to Fig. 15) per normal cell in each arm 10, based on the following equation (5).

$$Vk = Vsys/(Ncell-Nk) \qquad \text{Equation (5)}$$

(where k = 1 to 6)

Fig. 15 is a diagram showing the relationship between each arm 10, the number of abnormal cells Nk (k = 1 to 6), and the applied voltage Vk.

As shown in the figure, the control device 20 obtains the number of abnormal cells Nk and the applied voltage Vk for each arm 10.

In the cell 1 in which the abnormal current is detected, the input/output terminals T1 and T2 are bypassed by the bypass device 2 (refer to Fig. 14), and the cell 1 enters into a state without the significant voltage being applied thereto. Therefore, the applied voltage Vk per normal cell is increased. When the applied voltage Vk per normal cell exceeds the rated breakdown voltages of the switching element Q and the freewheel diode D, there arises a concern that the reliability of the normal cell may be lowered as in the cases in which the semiconductor element results in dielectric breakdown, etc.

The maximum applied voltage of the applied voltages Vk (k = 1 to 6) is called the maximum applied voltage Vmax. When the maximum applied voltage Vmax exceeds a predetermined specified voltage Vcrit, the system voltage setting unit 26 reduces the system DC voltage Vsys so that "Vmax≤Vcrit" is established. Here, it is preferable that the specified voltage Vcrit is a value lower than the rated breakdown voltages of the switching element Q and the freewheel diode D. Thus, even when there exists the cell 1 that has detected an abnormal current, the reliability of the normal cell is not lowered, so that the power conversion device 100 can be continuously operated till the maintenance timing to replace the abnormal cell with the normal cell.

[Effects of Embodiment]

As described above, according to the above-described embodiment, the power conversion device 100 includes: a semiconductor device (J1, J7) connected between a pair of input/output terminals T1, T2 and having a switching function (Q, Q7) of switching a current flowing in a first direction (T1 to T2) and a diode function (D) having a second direction (T2 to T1) opposite to the first direction (T1 to T2) as a forward direction; a drive circuit 40, 80 which controls an on/off state of the switching function (Q, Q7) and applies either a first forward voltage/current characteristic (PL) or a second forward voltage/current characteristic (PH) in which a forward voltage VF is lower than the first forward voltage/current characteristic (PL) for the same forward current IF to the diode function (D); an overcurrent determination unit (50) which outputs a first determination result (CP1) as to whether or not the current flowing in the first direction (T1 to T2) is in a first overcurrent state (Vout≥Vref1) and a second determination result (CP2) as to whether or not a current flowing in the second direction (T2 to T1) is in a second overcurrent state (Vref2≥Vout); a protection unit (60, 90) which reduces the current flowing in the first direction (T1 to T2) when the first determination result (CP1) is affirmative and applies the second forward voltage/current characteristic (PH) to the diode function (D) when the second determination result (CP2) is affirmative; and a bypass device 2 which bypasses between the pair of input/output terminals T1, T2 after the protection unit (60, 90) operates when the first determination result (CP1) or the second determination result (CP2) is affirmative.

Thus, even in both the case where the current flowing in the first direction (T1 to T2) enters the first overcurrent state (Vout≥Vref1) and the case where the current flowing in the second direction (T2 to T1) enters the second overcurrent state (Vref2≥Vout), the power consumption in the semiconductor device (J1, J7) can be reduced, and the semiconductor device (J1, J7) can be appropriately explosion-proofed. Consequently, the reliability of the cell 1 and the power conversion device 100 can be improved.

Also, it is more preferable that the switching function (Q) is realized by a voltage-controlled semiconductor element (Q) having a gate terminal G, and the protection unit (60) reduces a current flowing through the semiconductor element (Q) by reducing a gate voltage VGE applied to the gate terminal G when the first determination result (CP1) is affirmative. Thus, when the current flowing in the first direction (T1 to T2) enters the first overcurrent state (Vout≥Vref1), the power consumption in the semiconductor device (J1, J7) can be reduced by lowering the gate voltage VGE.

Further, the drive circuit 40 includes a PMOSFET (42), a first resistor (45), and a first NMOSFET (41), which are sequentially connected in series between a positive side voltage Vp and a negative side voltage Vm, and is configured to connect a connection point 46 between the first resistor (45) and the first NMOSFET (41) to the gate terminal G. The protection unit (60) includes a second resistor (66) and a second NMOSFET (63) sequentially connected in series between the connection point 46 and the negative side voltage Vm. More preferably, the protection unit (60) brings the PMOSFET (42) and the second NMOSFET (63) into an on state simultaneously only for a predetermined time and applies a voltage corresponding to each resistance value of the first and second resistors (45, 66) to the gate terminal G to thereby reduce the gate voltage VGE. This makes it possible to control the gate voltage VGE with a simple circuit.

In addition, as in the second embodiment, it is more preferable that the switching function (Q7) is realized by a voltage-controlled semiconductor element (Q7) having a first gate terminal (Gs) and a second gate terminal (Gc) which are independently controllable, and when the first determination result (CP1) is affirmative, the protection unit (90) cuts off the second gate terminal (Gc) to thereby reduce the current flowing through the semiconductor element (Q7). This makes it possible to suppress the influence of variations in the threshold voltage Vth1 and realize more robust control of the gate voltage VGE.

Furthermore, it is more preferable that the overcurrent determination unit (50) includes an integration signal output unit (54) which outputs an integration signal (Vout) obtained by time-integrating a back electromotive force Vet generated in a parasitic inductance LE present on the low potential side of the semiconductor device (J1, J7), and a determination unit (56, 57) which outputs the first and second determination results (CP1, CP2) based on the polarity and magnitude of the integration signal (Vout). Thus, since the first and second determination results (CP1, CP2) can be output using the parasitic inductance LE provided in the semiconductor device (J1, J7), the cost reduction of the power conversion device 100 can be realized.

In addition, it is more preferable that the bypass device 2 includes a bypass thyristor or a mechanical switch which allows a current to flow bidirectionally. This allows the cell 1 to be properly bypassed.

Moreover, it is more preferable that the power conversion device 100 includes: a plurality of arms 10 each having a plurality of cells 1 connected in series and a plurality of the bypass devices 2 connected to each of the cells 1; and a control device 20 which controls a plurality of the cells 1, and each of the cells 1 includes: the semiconductor device (J1, J7); the drive circuit 40, 80; the overcurrent determination unit (50); and the protection unit (60. 90). This allows the power conversion device 100 to function as a modular multilevel converter (MMC).

In addition, it is more preferable that the control device 20 includes: a cell voltage calculation unit 24 which calculates an applied voltage Vk per normal cell 1 in each arm 10 based on the number of the bypass devices 2 in each arm 10 which are in a bypass state; and a system voltage setting unit 26 which sets a system DC voltage Vsys applied to each arm 10 so that the applied voltage Vk is less than or equal to a predetermined specified voltage Vcrit. Thus, the appropriate system DC voltage Vsys can be set based on the number of the bypass devices 2 brought into the bypass state.

[Modifications]

The present invention is not limited to the above-described embodiments, and further includes various modifications. For example, the above-described embodiments have been described in detail in order to facilitate the understanding of the present invention, and the present invention is not necessarily limited to those including all of the described configurations. In addition, part of the configuration of one embodiment can be replaced with the configurations of other embodiments, and in addition, the configuration of the one embodiment can also be added with the configurations of other embodiments. Further, it is possible to delete part of the configuration of each embodiment, or to add or replace other configurations. In addition, as the control lines and information lines shown in the figures, there are shown those considered to be necessary for explanation. They do not necessarily show all the control lines and information lines necessary on the product. In practice, it may be considered that almost all configurations are interconnected. Possible modifications to the above embodiments include, for example, the following.

(1) In each of the above-described embodiments, the power conversion device 100 (refer to Fig. 1) had a total of three pairs of arms 10 of U-phase, V-phase, and W-phase in order to support a three-phase AC system 120. However, the power conversion device 100 may include a pair of upper and lower arms 10 corresponding to a single-phase AC system (not shown).

(2) Also, in each of the above-described embodiments, an example in which a power semiconductor module including a switching element and a freewheel diode in one package is applied as the "semiconductor device" has been described. However, the "semiconductor device" is not limited to this, and may be applied as a semiconductor device having a switching element and a freewheel diode mounted in individual packages.

(3) Further, the switching elements constituting the semiconductor device are not limited to IGBTs, but may be power MOSFETs. Also, various diodes such as a pn junction diode, a Schottky barrier diode, and a diode using both a pn junction and a Schottky junction can be used as the freewheel diode constituting the semiconductor device, as long as the forward voltage can be controlled by the control terminal. Further, Silicon (Si) can be applied as a semiconductor material which constitutes the switching element and the freewheel diode. In addition to this, wide bandgap semiconductors such as silicon carbide (SiC) and gallium nitride (GaN) can also be applied.

(4) In addition, in each of the above-described embodiments, the combination of ordinary switching elements Q and Q7 (in which current is conducted in one direction) and a freewheel diode D has been applied. In other words, in each of the above-described embodiments, the switching elements Q and Q7 have realized the "switching function", and the freewheel diode D has realized the "diode function". However, instead of both, a reverse conducting IGBT may be applied. In other words, the reverse conducting IGBT may realize both a "switching function" and a "diode function".

(5) Moreover, the cell 1 in each of the above-described embodiments includes the gate drive circuit 3 separate from the power semiconductor modules J1 and J7. However, the gate drive circuit 3 may be stored inside the power semiconductor modules J1 and J7.

(6) In addition, the freewheel diode D in each of the above-described embodiments includes the gate control terminal Gd (refer to Fig. 5) and selects the high injection characteristic PH or the low injection characteristic PL (refer to Fig. 8) according to the gate voltage VGdE applied thereto. However, even the normal (two-terminal) diode has a feature that the higher the element temperature of the diode, the lower the forward voltage VF for the same forward current IF. Therefore, this feature may be used to select the high injection characteristic PH or the low injection characteristic PL. Specifically, the normal (two-terminal) diode is applied instead of the freewheel diode D of each of the above embodiments, and the high injection characteristic PH or the low injection characteristic PL may be selected depending on whether the diode is heated by a heater or the like.

(7) Since the hardware of the control device 20 in the above embodiment can be realized by a general computer, the programs and the like for executing various processing of the control device 20 described above may be stored in a storage medium or distributed via a transmission path.

(8) Each of the above-described processing of the control device 20 has been described as software processing using a program in the above embodiment, but part or all thereof may be replaced with hardware processing using an ASIC (Application Specific Integrated Circuit; IC for specific usage) or an FPGA (Field Programmable Gate Array) or the like.

(9) Various processing executed by the control device 20 may be executed by a server computer via an unillustrated network. Various data stored in the above embodiments may also be stored in the server computer.

Reference Signs List

1 cell
2 bypass device
10 arm
20 control device
24 cell voltage calculation unit
26 system voltage setting unit
40, 80 drive circuit
45 resistor (first resistor)
46 connection point
50 short circuit/surge detection circuit (overcurrent determination unit)
54 integration circuit (integration signal output unit)
56, 57 comparator (determination unit)
60, 90 suppress circuit (protection circuit)
66 resistor (second resistor)
100 power conversion device
D freewheel diode (diode function)
G gate terminal
Gc auxiliary gate terminal (second gate terminal)
Gs gate terminal (first gate terminal)
IF forward current
J1 power semiconductor module (semiconductor device)
J7 power semiconductor module (semiconductor device)
LE parasitic inductance
PH high injection characteristic (second forward voltage/current characteristic)
PL low injection characteristic (first forward voltage/current characteristic)
VF forward voltage
Vk applied voltage
Vm negative side voltage
Vp positive side voltage
CP1 comparison signal (first determination result)
CP2 comparison signal (second determination result)
VGE gate voltage
Vet back electromotive force
Q, Q7 switching element (switching function, semiconductor element)
Vout output voltage (integration signal)
Vsys system DC voltage
J1, J7 power semiconductor module (semiconductor device)
T1, T2 input/output terminal
Vcrit specified voltage

**Claims**

1. A power conversion device comprising:

   a semiconductor device connected between a pair of input/output terminals, and having a switching function of switching a current flowing in a first direction and a diode function having, as a forward direction, a second direction opposite to the first direction;
   a drive circuit which controls an on/off state of the switching function and applies either a first forward voltage/current characteristic or a second forward voltage/current characteristic in which a forward voltage is lower than the first forward voltage/current characteristic for the same forward current to the diode function;

an overcurrent determination unit which outputs a first determination result as to whether or not the current flowing in the first direction is in a first overcurrent state and a second determination result as to whether or not a current flowing in the second direction is in a second overcurrent state;

a protection unit which reduces the current flowing in the first direction when the first determination result is affirmative, and applies the second forward voltage/current characteristic to the diode function when the second determination result is affirmative; and

a bypass device which, when the first determination result or the second determination result is affirmative, bypasses between the pair of input/output terminals after the protection unit operates.

2. The power conversion device according to claim 1, wherein

the switching function is realized by a voltage-controlled semiconductor element having a gate terminal, and the protection unit reduces a current flowing through the semiconductor element by reducing a gate voltage applied to the gate terminal when the first determination result is affirmative.

3. The power conversion device according to claim 2, wherein

the drive circuit includes a PMOSFET, a first resistor, and a first NMOSFET, which are sequentially connected in series between a positive side voltage and a negative side voltage, and is configured to connect a connection point between the first resistor and the first NMOSFET to the gate terminal, and the protection unit includes a second resistor and a second NMOSFET sequentially connected in series between the connection point and the negative side voltage, and the protection unit brings the PMOSFET and the second NMOSFET into an on state simultaneously only for a predetermined time and applies a voltage corresponding to each resistance value of the first and second resistors to the gate terminal, to reduce the gate voltage.

4. The power conversion device according to claim 1, wherein

the switching function is realized by a voltage-controlled semiconductor element having a first gate terminal and a second gate terminal which are independently controllable, and when the first determination result is affirmative, the protection unit cuts off the second gate terminal to reduce the current flowing through the semiconductor element.

5. The power conversion device according to claim 1, wherein
the overcurrent determination unit includes:

an integration signal output unit which outputs an integration signal obtained by time-integrating a back electromotive force generated in a parasitic inductance present on the low potential side of the semiconductor device; and

a determination unit which outputs the first and second determination results based on the polarity and magnitude of the integration signal.

6. The power conversion device according to claim 1, wherein the bypass device includes a bypass thyristor or a mechanical switch which allow a current to flow bidirectionally.

7. The power conversion device according to any one of claims 1 to 6, including:

a plurality of arms each having a plurality of cells connected in series and a plurality of the bypass devices connected to each of the cells; and
a control device which controls a plurality of the cells,
wherein
each of the cells includes the semiconductor device, the drive circuit, the overcurrent determination unit, and the protection unit.

8. The power conversion device according to claim 7, wherein
the control device includes:

a cell voltage calculation unit which calculates an applied voltage per normal cell in each arm based on the number of the bypass devices in each arm which are in a bypass state; and

a system voltage setting unit which sets a system DC voltage applied to each arm so that the applied voltage is less than or equal to a predetermined specified voltage.

# FIG. 1

# FIG. 2

# FIG. 3

# FIG. 4

# FIG. 5

# FIG. 6

| | ELEMENT THROUGH WHICH CURRENT Ic FLOWS | OCCURRENCE EVENT | POLARITY OF BACK ELECTROMOTIVE FORCE Vet (REFERENCE POTENTIAL SS) | POLARITY OF OUTPUT SIGNAL Vout (REFERENCE POTENTIAL SS) | ABNORMALITY DETERMINATION (MAGNITUDE OF Vout) | SUPPRESS CIRCUIT |
|---|---|---|---|---|---|---|
| #1 | SWITCHING ELEMENT Q (Ic>0) | SHORT CIRCUIT OCCURS IN SWITCHING ELEMENT | NEGATIVE | POSITIVE | ABNORMAL $(Vout \geq Vref1 > 0)$ | OPERATED |
| #2 | | TURN ON OF SWITCHING ELEMENT | NEGATIVE | POSITIVE | NORMAL $(Vref1 > Vout > 0)$ | NON-OPERATED |
| #3 | | TURN OFF OF SWITCHING ELEMENT | POSITIVE | NEGATIVE | NORMALL $(0 > Vout > Vref2)$ | NON-OPERATED |
| #4 | FREEWHEEL DIODE D (Ic<0) | SURGE CURRENT OCCURS IN FREEWHEEL DIODE | POSITIVE | NEGATIVE | ABNORMAL $(0 > Vref2 \geq Vout)$ | OPERATED |

EP 4 468 579 A1

# FIG. 7

# FIG. 8

# FIG. 9

# FIG. 10

EP 4 468 579 A1

# FIG. 11

# FIG. 12

# FIG. 13

# FIG. 14

# FIG. 15

| ARM | 10U | 10V | 10W | 10X | 10Y | 10Z |
|---|---|---|---|---|---|---|
| NUMBER OF CELLS HAVING DETECTED ABNORMAL CURRENT | N1 | N2 | N3 | N4 | N5 | N6 |
| APPLIED VOLTAGE PER NORMAL CELL | V1 | V2 | V3 | V4 | V5 | V6 |

## INTERNATIONAL SEARCH REPORT

| International application No. |
|---|
| **PCT/JP2022/048485** |

**A. CLASSIFICATION OF SUBJECT MATTER**

*H02M 1/00*(2007.01)i; *H02M 7/48*(2007.01)i; *H02M 7/49*(2007.01)i
FI: H02M1/00 H; H02M7/48 M; H02M7/49

According to International Patent Classification (IPC) or to both national classification and IPC

**B. FIELDS SEARCHED**

Minimum documentation searched (classification system followed by classification symbols)

H02M1/00; H02M7/48; H02M7/49

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 6943184 B2 (KABUSHIKI KAISHA MEIDENSHA) 29 September 2021 (2021-09-29) entire text, all drawings | 1-8 |
| A | WO 2017/168518 A1 (MITSUBISHI ELECTRIC CORP.) 05 October 2017 (2017-10-05) entire text, all drawings | 1-8 |
| A | JP 2017-139393 A (HITACHI POWER SEMICONDUCTOR DEVICE, LTD.) 10 August 2017 (2017-08-10) entire text, all drawings | 1-8 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **28 February 2023** | **07 March 2023** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

| Patent document cited in search report | Publication date (day/month/year) | Patent family member(s) | Publication date (day/month/year) |
|---|---|---|---|
| JP 6943184 B2 | 29 September 2021 | (Family: none) | |
| WO 2017/168518 A1 | 05 October 2017 | US 2019/0280614 A1 entire text, all drawings EP 3439162 A1 | |
| JP 2017-139393 A | 10 August 2017 | WO 2017/135037 A1 | |

Form PCT/ISA/210 (patent family annex) (January 2015)

**EP 4 468 579 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017077983 A
- JP 2008072848 A
- JP 2018117044 A